# EUROPEAN PATENT SPECIFICATION

(11) **EP 2 170 565 B1**
(45) Date of publication and mention of the grant of the patent: **18.04.2012**
(21) Application number: 08762450.8
(22) Date of filing: 23.06.2008
(51) Int. Cl.: B25J 18/06

(54) **ROBOTIC ARM WITH A PLURALITY OF ARTICULATED SEGMENTS**
ROBOTERARM MIT MEHREREN ANGELENKTEN SEGMENTEN
BRAS ROBOTIQUE À PLUSIEURS SEGMENTS ARTICULÉS

(30) Priority: 23.06.2007 GB 0712205
(43) Date of publication of application: 07.04.2010
(73) Proprietor: Oliver Crispin Robotics Limited, Filton Bristol BS34 7JN (GB)
(72) Inventor: BUCKINGHAM, Robert, Oliver, Abingdon OX14 3AY (GB); GRAHAM, Andrew, Crispin, Bristol BS16 5AH (GB)
(74) Representative: Arrowsmith, Peter Michael E.
(86) International application number: PCT/GB2008/002138
(87) International publication number: WO 2009/001054

(56) References cited:
- JP-A- 2000 052 282
- US-A- 3 497 083
- US-A- 5 307 447

## Description

This invention relates to robotic arms, and particularly to robotics arms for reaching into and working within pipes.

Pipes are a general purpose means of transferring liquids, solids and gases between two points or acting as a guiding means or structural support between two points, characterised by a high length to diameter ratio. Pipes may be continuous or have discontinuities such as steps or corners. Another form of discontinuous pipe is where one section of pipe is separated from another section of pipe by a chamber or void. In such cases the pipe that enters the void may not be co-axial with the pipe that exits the void. Pipes may have rigid or flexible walls. Pipes may be circular in cross section of square or have other cross sections. Pipes may also be flexible or rigid. For instance arteries within humans or animals are effectively flexible pipes. Rigid pipes tend to dominate within processing industries.

It may be advantageous to be able to access the interior of a length of such pipework, for example in processing plant where the cost of disassembling the pipe in order to gain access to the void or chamber at the end of the pipe is high or where disassembly of the pipes is not possible. The nuclear industry has numerous examples of pipework which was not designed to be disassembled where it is now a requirement to inspect the pipe for corrosion or to reach to the other end of the pipe in order to access a chamber to conduct repair work or take samples. Similar such examples exist in the oil and gas industry where there is a requirement to sample material at the end of a pipe or remove obstructions within a pipe or inspect the pipe for corrosion or leaks by visual means or ultrasound or other well known methods.

There are many apparatus suitable for the task of working within pipes. US 4,862,808 describes a robotic pipe crawling device, and US 7,210,364 presents an autonomous robotic crawler for use in pipe inspection. Such devices are designed to travel long distances down fluid filled pipes. Some can be considered to be a 'three dimensional train' with the inner surface of the pipe acting as the rails of the train, with a drive module and a power module and modules which may hold sensors or cleaning and repair equipment. Each module is equipped with wheels that engage with the surface of the pipe. US 7,188,568 is also a self propelled vehicle in this case more like a three dimensional tracked vehicle with motors driving tracks that engage with the pipe walls. US 6,427,602 is representative of devices that have opposing legs that allow the device to 'walk' down a pipe. US 6,035,786 is a miniature pipe crawling tractor which has a number of sections, the middle section being able to move radially with respect to the front and back sections so that the device can adapt to changing pipe diameters. US 5,375,530 describes a device with a stabilizing mid-section. US 5,370,006 describes a device which has axially displaced sensors that can inspect the surfaces of the pipe wall. US 3,994,173 describes a means of orientating a crawler in this case within a pipe which is open at both ends. Another wheeled device for advancing along a pipe is described in JP-A-2000 052 282.

Another common type of device is a two part device where the lead part advances and then the following part catches up in the manner of an inch- worm. US 5,285,689 and US 5,121,694 and US 5,309,844 and US 5,018,451 are typical of this type of device. These devices may be autonomous or may be used with tethers or for advancing the tether. US 5,649,603 is representative of devices that are commonly referred to as down hole tools which also have wheels to guide the device down the pipe. US 4,654,702 is a portable collapsible crawling device which consists of a vehicle which has a collapsible mast which can be erected to provide an anchor against the opposing wall.

A second group of devices is used where the requirement is to reach a relatively short distance down a pipe. Devices that are used to inspect and unblock drains or conduct a colonoscopy are often described as flexible endoscopes or borescopes. These devices generally have little rigidity of themselves and are pushed into the pipe. The compliant nature of such a device allows it to be pushed round a small number of bends using the wall of the pipe to react the forces which are required to change the shape of the device. These devices are often equipped with some form of tip steering that enable the device to travel longer distances within the pipe. Typically this would be in the form of some wires running from the tip of the device to control means located in the base of the device which are operated by the user.

It is well known that even after only a small number of bends a push device will jam and whilst it may be pulled out it may not be possible to advance any further. US 5,423,230 presents a device which is a combination of a push device and a pipe crawler, with the pipe crawling element pulling the push device further down a pipe by providing some additional ability to navigate corners. US 4,050,384 presents a push device which has a plurality of traction devices that can be inserted as required at points along the push device in order increase the reach of the device.

It is also well known that devices that are pushed into pipes or devices that are self- propelled have limited ability to bridge voids. This has been clear when using such devices to inspect within collapsed buildings. It is well known that even with conforming wheels or other mechanisms changes in pipe cross section and especially voids between sections of pipe or working in a void at the end of a pipe are extremely problematic.

In order to be able to work within a void the arm must have some stiffness. A few mechanisms have been proposed and US 5,956,077 is an example of a jointed structure with a servomotor mounted at each joint that is able to operate within a tank. However this type of arm is constrained by the length of the rigid links between joints which means that tight curvatures are not possible. Locating the servo control means within the arm itself also gives rise to a limited reach because of the self- weight of the arm. Another multi-joint arm with controllable joint angles for enabling the arm to adopt a particular shape is described in US 5,307,447, as well as a method of controlling the advancing movement of the arm into a bent pipe.

WO 0216995, upon which the preamble of claim 1 is based, describes a robot arm which is able to advance into an environment by 'tip following', in a snake-like manner. The arm comprises a plurality of articulated segments, in which the position of the distal end of each segment is controlled, for example by control cables, so that the arm can adopt a required shape. Each segment may comprise a plurality of articulated links, such that it may adopt a curved shape. Another arm in which articulated segments can have their position controlled by ropes is described in US 3,497,083.

According to the present invention, there is provided a robotic arm as defined in claim 1.

Thus the arm can be manipulated via the actuators, for example when operating in a void, or can be manipulated by use of the guide member alone or in addition, to follow an adjacent surface, for example when operating in a pipe.

Since the arm may be supported by the guide(s), it may be able to reach a longer distance down a pipe, say 50m down a 100mm diameter pipe. Since the shape of the arm may also be controlled by the actuators, it may also be able to work in a void beyond the pipe. This device will be referred to as a "pipe snake-arm".

The segments may be flexible or rigid, and may be linked by joints. Each segment may contain a plurality of articulated links. The guide comprises wheel or set of wheels, or other rolling contact mechanisms that are arranged to conform to the adjacent surface, such as the internal surface of a pipe. This allows the self-weight of the arm to be supported by the pipe, so as to alleviate the requirement for the arm to be stiff. A guide may be provided on a plurality of the segments or on all of the segments.

The segments may be hollow or may include channels for use as a means of delivering fluids or providing cables or services to tools or sensors located at the distal end of the device.

The actuators may comprise cables or ropes, with a set of ropes (for example three) attached to the distal end of each segment. The ropes run from the end of each segment back to the proximal end or base of the device. Changing the length of the ropes for example using motors communicating with a computer control system, exerts moments at intervals along the length of the device in order to control the shape of the arm so as to steer the segments around a corner or to navigate across a change in cross section. This has the advantage of reducing the tendency of the arm to buckle and or jam in a pipe, which could restrict the number of corners that can be navigated.

By holding the ropes in tension such that the arm is held in a stable or stiff shape, it is also possible to navigate the pipe snake-arm across voids and also to conduct work within a void. Also by holding the ropes in tension it is possible to reduce the loads on the pipe itself transmitted by the guides. This may be critical if the condition of the pipe is unknown, especially in cases where corrosion is suspected and where limitation of damage is critical.

The proximal end or base of the device may be arranged to travel within the pipe. For example, the base of the device may be mounted on a vehicle such as a pipe crawler. Alternatively, the base may be mounted outside the pipe. The arm may conveniently be of constant cross-section.

The arm may be advanced or retracted by mounting the arm on a linear axis or equivalent or by unbending the arm in such a way as to advance the most proximal point (the tip) towards a work site.

It will be appreciated by a person skilled in the art that once the arm has taken up a compound shape, i.e. followed a series of curves in different planes, the device may twist. Advantageously, each guide, for example a set of wheels, is mounted to the arm on a bearing so that it can rotate with respect to the arm. In a further example, the wheels may be arranged to be locked and unlocked in order further to react forces from the pipe or to navigate particular features.

The wheels may be sprung telescopically or by means of sprung hinges to engage with the pipe. In examples where a plurality of wheels are required on the or each segment, for instance three wheels mounted 120 degrees apart, it may be advantageous for the amount of deflection of each wheel to be substantially equal to urge the device towards the centre of the pipe. This may be achieved by linking the wheels by means of a mechanical linkage to share the deflection.

The present invention also provides a method of controlling a robotic arm as defined above, to alleviate the possibility that the device jams within the pipe. The arm may navigate through pipes where there is a priori knowledge of the pipe or where the pipe route in unknown.

Where the pipe route is known, data defining the shape of the pipe may be entered in the arm control system. It is possible to calculate the required angles of the end of each segment, or each of the sets of wheels, and from this to calculate the required lengths of each of the ropes at each point as the device advances along the pipe, such that the appropriate shape of arm may be produced at each instant. Thus, an algorithm may be provided for calculating a vector of rope lengths for a vector of pipe orientations. Conveniently, the vector of rope lengths may be converted into a vector of motor demands, and applied to the motors. Alternatively such data concerning the pipe shape can be gathered as the arm advances.

The method may also comprise copying the shape of the most distal segment sequentially to the more proximal segments, as the proximal segments each advance to the previous position of the more distal segment. This method simplifies the algorithm, such that the device will conform to the desired path.

In situations where the pipe route is unknown or under-specified it may be useful to know the load exerted at each contact point with the pipe. Thus the arm of the present invention may comprise a load cell or strain gauge arranged to ascertain the load exerted on the wall, or may comprise proximity sensors arranged to ascertain the distance from the arm to the wall and hence to calculate the compression of any spring members in each leg, and accordingly the loads.

Furthermore, the actual orientation of the segments may be measured or calculated, and the actual shape of the arm computed. This may be useful for mapping an unknown pipe route. Such data may be stored and retrieved, and may subsequently enable the device to be manoeuvred move more quickly through a known pipe.

The method may also include balancing the forces experienced by each wheel, or increasing the load through one set of wheels in order to react loads at a different part of the arm. Thus, a control algorithm may be provided which minimises or equalises the forces imposed on surfaces of the pipe.

The distal or mid section of the pipe snake-arm may be unsupported by guides. This may enable the device to bridge voids or significant increases in pipe diameter where the wheels are no longer able to make contact with the pipe. When the distal or mid section of the pipe snake-arm is unsupported the arm may be able to follow straight or non-straight paths using the actuators. Being able to follow non-straight paths across voids may enable the device to exit from one pipe and enter another pipe which is not co-axial with the first pipe.

The distal section of the arm may be able to operate unsupported by guides within a void at the end of a pipe. In such circumstances it may be beneficial for the section of pipe snake-arm remaining within the pipe to lock in the pipe to act as a stable base. In other situations it may be necessary for the arm to continue to advance or retract within the pipe to enable work to be conducted within the void.

In order that the invention may be more readily understood, reference will now be made, by way of example, to the accompanying drawings, in which:
Figures 1a to 1d are schematic cross-sectional side views of a robotic arm according to one embodiment of the invention in a pipe;
Figures 2a and 2b are schematic perspective views of the arm of Figure 1 in a pipe;
Figure 3 is a schematic cross-sectional view of an arm according to another embodiment of the invention in a pipe;
Figures 4a and 4b are end and side cross sectional views respectively of an arm according to a further embodiment of the invention;
Figures 5a and 5b are perspective and end cross-sectional views of the wheel assembly part of the arm of Figure 4;
Figures 6a to 6c are two end views and a perspective view respectively of an arm according to yet another embodiment of the invention;
Figure 7 is a perspective view of the arm of Figure 5;
Figure 8 is a perspective view of an arm according to an embodiment of the invention in a pipe;
Figure 9 is a perspective view of the arm of Figure 8 crossing a void between two pipes; and
Figure 10 is a perspective view of the arm of Figure 8 travelling into a chamber through a pipe.

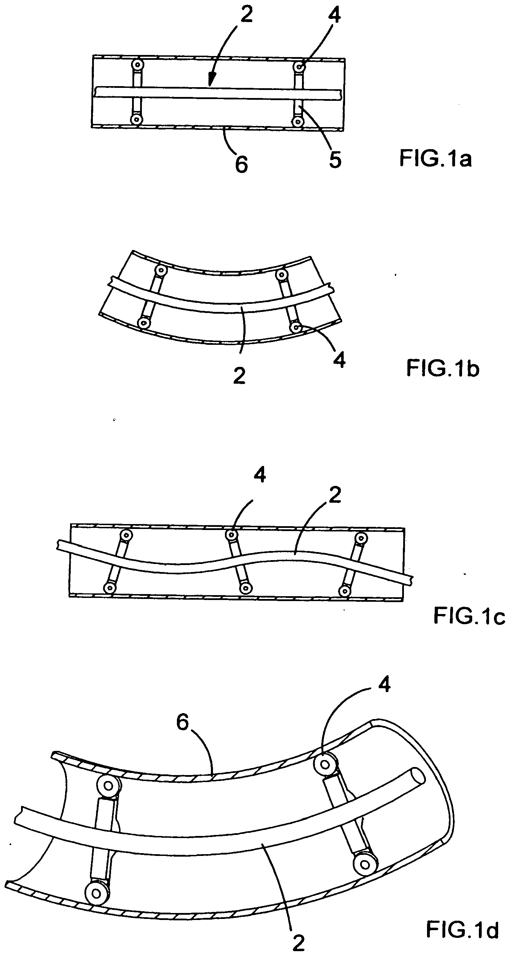

Referring now to Figure 1a, a robotic arm 2 is shown schematically. The arm 2 is in the form of an elongate cylinder (shown cut away), and is equipped at intervals along its length with guides in the form of a plurality of sets of wheels 4, that engage with the wall 6 of a pipe. In this example there are two wheels 4 mounted on legs 5 extending away from the arm in the radial direction, and fixed to the arm 2 preferably via a rotatable bearing (not shown). The wheels are preferably evenly spaced around the circumference of the arm 2, in this case disposed opposite each other.

The arm 2 includes actuators for controlling the shape thereof, as will be described in more detail below. Thus, in an idealised situation where the arm shape is controlled to conform to the pipe shape, the wheels 4 will remain orthogonal to the pipe wall 6 even when the pipe is curved, as shown in Figure 1b. In practice the arm 2 may tend to buckle and the wheels 4 may not be orthogonal, as shown in Figure 1c.

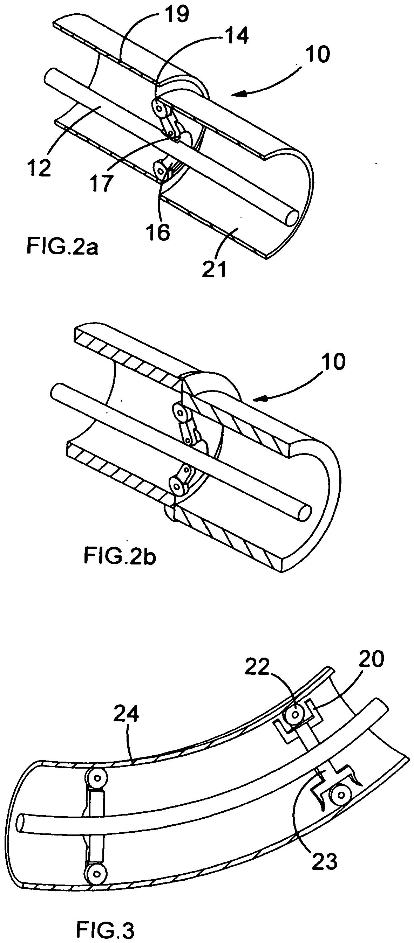

Figures 2a and 2b show a discontinuous pipe 10, and a pipe snake-arm 12 equipped with a plurality of sets of wheels 14 that are mounted on levers 16. The levers 16 are connected to the arm 12 via spring hinges 17. This enables the pipe snake-arm to negotiate the discontinuity, since the wheels 14 are biased outwardly to engage the wall 19 of the first pipe section, and can ride over the wall by being urged inwardly against the spring bias when the arm enters the second section 21.

As shown in Figure 3 the arm may be equipped with sensors, 20, attached to at least one set of wheels 22 that may be used to measure the load within each wheel supporting leg 23, or the distance to the pipe wall 24.

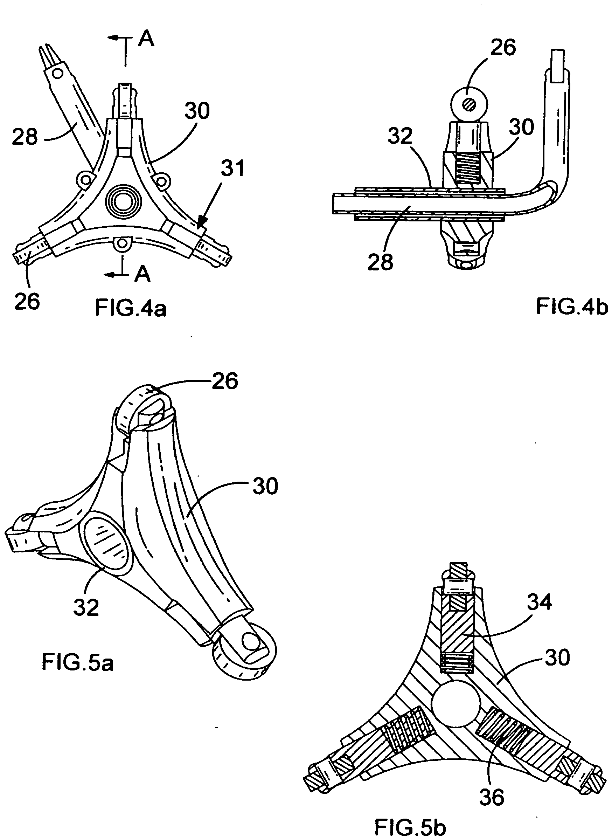

Figures 4a and 4b show an embodiment where the wheels 26 that are arranged to make contact with the pipe wall are mounted in a carrier 30 which is attached to the arm via a bearing 32 so as to be able to rotate about the arm 28 so that as the arm rotates the wheels do not also rotate about the arm axis. The carrier 30 is generally triangular, with a wheel 26 mounted at each apex 31. A locking mechanism may also be provided so that the bearing 32 may be locked so that the wheels are not able to rotate about the arm.

As shown in Figures 5a and 5b, the wheels 26 may be spring loaded by being attached to wheel mounts 34 biased outwardly of the carrier 30 by springs 36 to engage with the pipe wall. The carrier may include a sensor for measuring the amount of spring extension for each wheel. This measurement may be used by the computer control system to vary the rope tension via the actuators in order to change the shape of the arm to maintain an equal extension for each wheel 26. This will encourage the device to centralise within the pipe. If the wheels reach full extension, this may indicate that the pipe has increased in diameter or that the arm is now in a void at the end of the pipe. This information may be used by the control system to change the control algorithm in real time in order to adapt to this scenario.

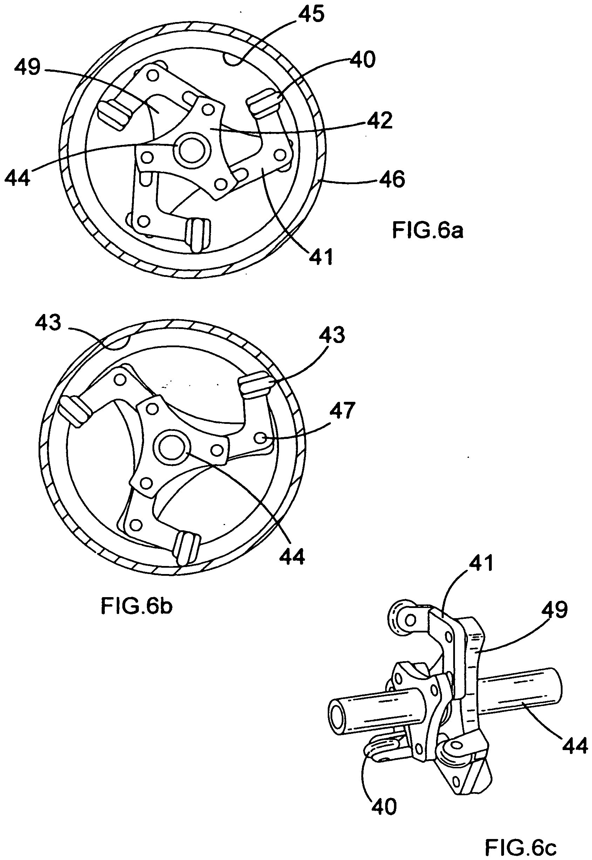

Figures 6a to 6c show an embodiment in which the wheels 40 are each mounted on a dog-leg 41, the dog-legs being journalled to a central linkage member 42 mounted on the arm 44, and being pivotally mounted on a carrier 49. This encourages the arm 44 to remain in the centre of the pipe 46 irrespective of diameter changes. Thus it can be seen from Figures 6a and 6b that, when the arm enters a larger diameter section 43 from a smaller diameter section 45, the linkage member 42 turns, pivoting each dog-leg 41 about its pivotal mount 47 such that the wheels 40 all move outwardly together.

When such a set of wheels 40 is within a void or when the pipe diameter is too great for the wheels to maintain contact, the arm may include a sensor for sensing this condition. The wheels could be fully retracted or fully extended by turning the linkage member 42, or controlled in a way to optimise performance.

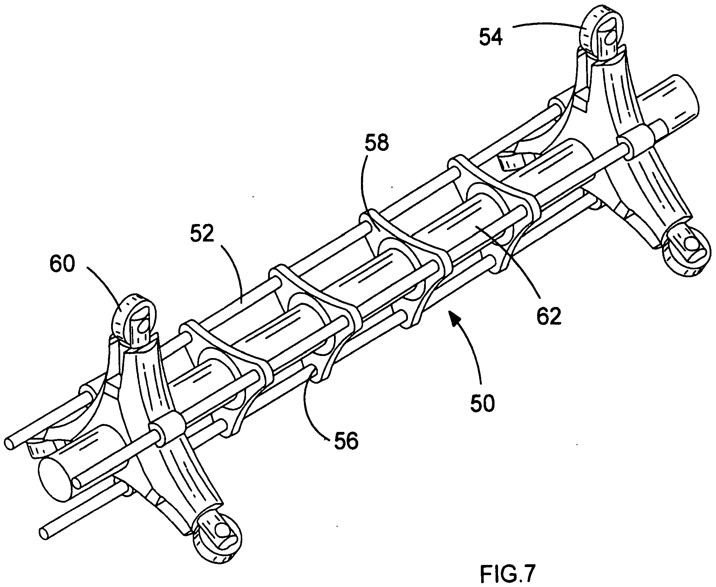

Figure 7 shows a segment of a pipe snake-arm 50 shown in a straight configuration. This segment is shown with three control ropes 52, which attach adjacent a first set of wheels 54 at the distal end of the segment. The ropes 52 also pass through holes 56 within supporting structures 58 distributed along the length of the arm between adjacent sets of wheels 54, 60. The central tube 62 may be flexible or jointed such that varying the tension in the wire ropes 52 will cause the tube to bend in order to change the shape of the arm and thus the orientation of the wheels 54 with respect to the previous set of wheels 60. The tension may be varied using actuators such as motors turning spindles on which the ropes are mounted.

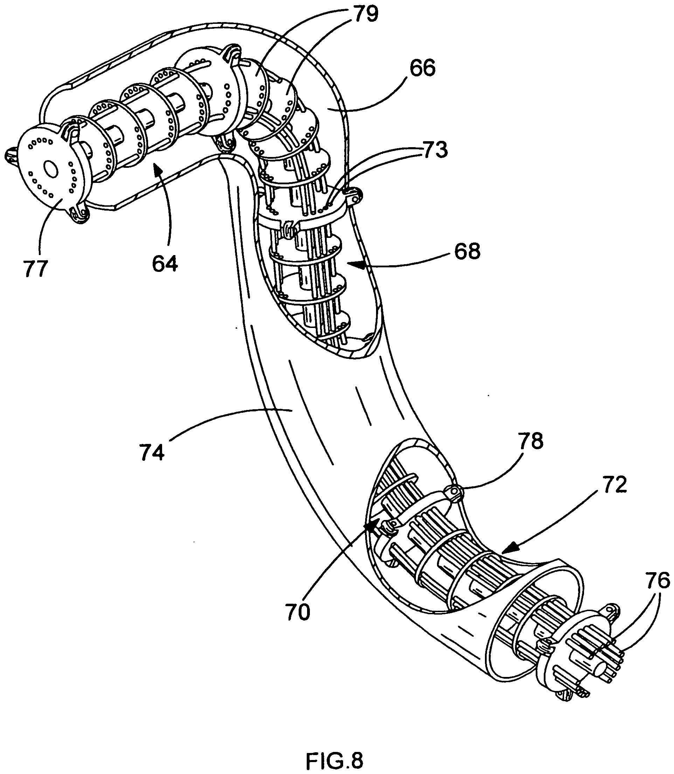

Figure 8 shows the most distal five segments 64, 66, 68, 70, 72 of a pipe snake-arm in a curved pipe 74. The arm has a hollow jointed central 'backbone' 75, and a set of control ropes 76 associated with each segment. Large supporting elements 77 mounting wheels 78 are provided at the end of each segment, and intermediate supporting element 79 are distributed along the length of the backbone 75 between the large elements 77. The elements 77, 79 include apertures 73 distributed around the circumference for carrying the control ropes 76. Such a device may be equipped with tools or sensors at the distal tip. Segments may also be sleeved in order to provide protection to the device or environment.

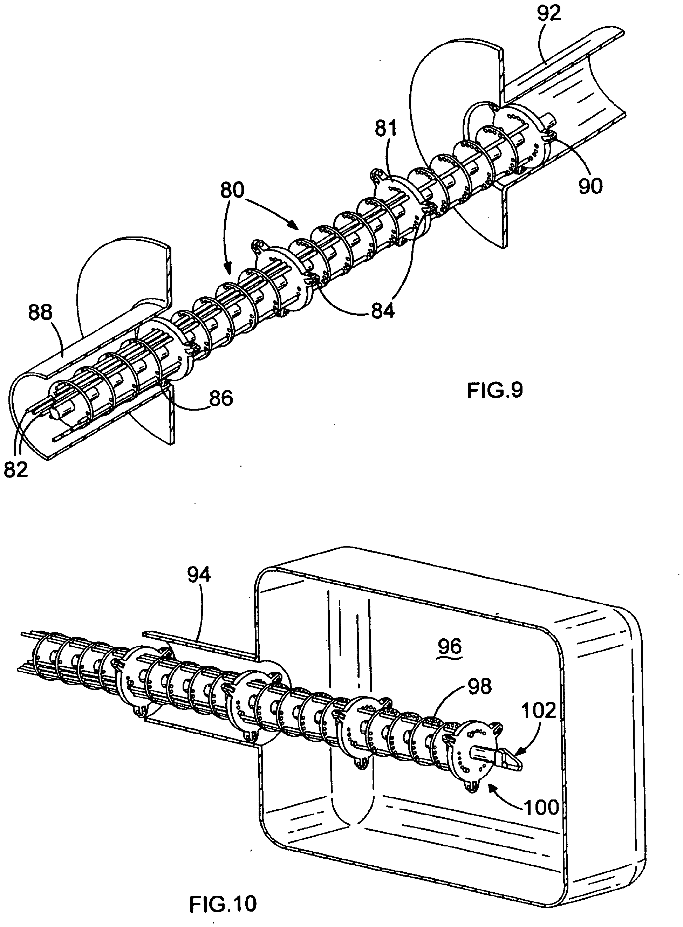

Figure 9 shows an arm similar to that of Figure 8, having a plurality of segments 80 with sets of ropes 82 to control the shape of each segment, and sets of wheels 84 mounted around the edge of large supporting elements 81 at the distal end of each segment. Figure 9 shows a situation where some of the wheels 86 are in contact with a proximal pipe 88 and some wheels 90 are in contact with a distal pipe 92. In this case the distal and proximal pipes are shown coaxial although this is not a requirement. Figure 9 also shows sets of wheels 84 that are within a void between the two pipes 88, 92. In this case the ropes 82 to these segments are used to apply moments to the ends of each segment 80 in order to control the position and orientation of the end of the segment in space.

Figure 10 shows the situation in which part of the device is in a proximal pipe 94 and part of the device is within a void 96 at the end of the pipe. In such a situation the ropes 98 to the unsupported distal end 100 of the pipe snake-arm are used to control the movement of the pipe snake-arm within the void in order to reach and conduct work within the void. Figure 10 also shows a tip mounted tool 102 and/or sensor package.

## Claims

1. A robotic arm (2, 12, 28, 44, 50) having a plurality of articulated segments, and a plurality of actuators arranged to control the position of each segment for guiding movement of the arm, the actuators comprising control cables or ropes (52, 76, 82, 98), a set of control cables or ropes extending from the proximal end of the device and being attached to the distal end of each segment, **characterised in that** at least one of the segments is provided with a guide comprising at
least one rolling contact or wheel (4, 22, 26, 40, 54, 60, 78, 86, 90), the guide being arranged to cooperate with a surface adjacent the arm for guiding movement of the arm in relation to the surface.

2. A robotic arm as claimed in claim 1, in which each segment comprises a plurality of articulated links.

3. A robotic arm as claimed in claims 1 or 2, in which each segment includes at least one channel arranged together to provide a path to the distal end of the device.

4. A robotic arm according to any preceding claim, in which the proximal end of the device is arranged to travel within a pipe

5. A robotic arm according to claim 4, in which the proximal end of the device is mounted on a vehicle for travelling within the pipe.

6. A robotic arm according to any preceding claim, having a substantially constant cross-section.

7. A robotic arm according to any preceding claim, in which each guide is rotatably mounted with respect to the segment for rotation about the longitudinal axis of the arm.

8. A robotic arm according to any preceding claim, in which the or each guide is arranged to be lockable to resist movement of the segment with respect to the surface.

9. A robotic arm according to any preceding claim, in which the or each guide is biased away from the segment to engage with the surface.

10. A robotic arm according to any preceding claim, in which the or each guide comprises a plurality of guide members spaced around the circumference of the arm.

11. A robotic arm according to claim 10, in which the guide members of the or each guide are arranged to extend a substantially equal distance away from the arm, so as to urge the arm towards the centre of a space having a surrounding surface.

12. A robotic arm according to any preceding claim, in which the or each guide comprising a load cell or strain gauge arranged to ascertain the load exerted on the surface by the guide.

13. A robotic arm according to any preceding claim, comprising a proximity sensor arranged to ascertain the distance from the arm to the surface.

14. A method of controlling a robotic arm as claimed in any preceding claim, comprising: entering data into a control system, the data defining the shape of a channel in which the arm is advancing, calculating from the data the required angle of the distal end of each segment at the next position of the arm as the arm advances, calculating the required length of each control cable to produce the required angles of the distal ends of each segment, and operating the actuators to produce the required cable lengths while advancing the arm to the next position.

15. A method according to claim 14, in which the next position of the arm for which the calculation is performed comprises the position of the arm in which each segment will occupy the current position of the next most distant segment.

## Patentansprüche

1. Roboterarm (2, 12, 28, 44, 50) mit mehreren angelenkten Segmenten und mehreren Aktoren, die ausgeführt sind, um die Position jedes Segments zum Führen der Armbewegung zu steuern, wobei die Aktoren Steuerkabel oder -seile (52, 76, 82, 98) umfassen, wobei sich eine Gruppe von Steuerkabeln oder -seilen vom proximalen Ende der Vorrichtung erstreckt und am distalen Ende jedes Segments befestigt ist, **dadurch gekennzeichnet, dass** mindestens eines der Segmente mit einer Führung ausgestattet ist, die mindestens einen Rollkontakt oder ein Rad (4, 22, 26, 40, 54, 60, 78, 86, 90) umfasst, wobei die Führung ausgeführt ist, um mit einer Oberfläche, die benachbart zu dem Arm ist, zum Führen der Armbewegung in Bezug auf die Oberfläche zusammenzuwirken.

2. Roboterarm nach Anspruch 1, bei dem jedes Segment mehrere angelenkte Bindeglieder umfasst.

3. Roboterarm nach Anspruch 1 oder 2, bei dem jedes Segment mindestens einen Kanal umfasst, die gemeinsam angeordnet sind, um eine Bahn zum distalen Ende der Vorrichtung bereitzustellen.

4. Roboterarm nach einem der vorhergehenden Ansprüche, bei dem das proximale Ende der Vorrichtung ausgeführt ist, sich innerhalb eines Rohrs fortzubewegen.

5. Roboterarm nach Anspruch 4, bei dem das proximale Ende der Vorrichtung auf einem Fahrzeug zum Fortbewegen innerhalb des Rohrs befestigt ist.

6. Roboterarm nach einem der vorhergehenden Ansprüche, der einen im Wesentlichen konstanten Querschnitt aufweist.

7. Roboterarm nach einem der vorhergehenden Ansprüche, bei dem jede Führung in Bezug auf das Segment für die Drehung um die Längsachse des Arms drehbar befestigt ist.

8. Roboterarm nach einem der vorhergehenden Ansprüche, bei dem die oder jede Führung so angeordnet ist, dass sie arretierbar ist, um einer Bewegung des Segments in Bezug auf die Oberfläche standzuhalten.

9. Roboterarm nach einem der vorhergehenden Ansprüche, bei dem die oder jede Führung vom Segment weg vorgespannt ist, um in die Oberfläche einzugreifen.

10. Roboterarm nach einem der vorhergehenden Ansprüche, bei dem die oder jede Führung mehrere Führungselemente umfasst, die um den Umfang des Arms beabstandet sind.

11. Roboterarm nach Anspruch 10, bei dem die Führungselemente der oder jeder Führung so ausgeführt sind, dass sie sich in einem im Wesentlichen gleichen Abstand vom Arm weg erstrecken, so dass der Arm zur Bewegung in die Mitte eines Bereichs mit einer umgebenden Oberfläche gedrängt wird.

12. Roboterarm nach einem der vorhergehenden Ansprüche, bei dem die oder jede Führung eine Kraftmessdose oder einen Dehnungsmesser umfasst, die angeordnet sind, die Kraft zu bestimmen, die von der Führung auf die Oberfläche ausgeübt wird.

13. Roboterarm nach einem der vorhergehenden Ansprüche, umfassend einen Näherungssensor, der angeordnet ist, den Abstand vom Arm zur Oberfläche zu bestimmen.

14. Verfahren zum Steuern eines Roboterarms nach einem der vorhergehenden Ansprüche, umfassend: Eingeben von Daten in ein Steuerungssystem, wobei die Daten die Form eines Kanals bestimmen, in dem sich der Arm fortbewegt, ausgehend von den Daten; Berechnen des erforderlichen Winkels des distalen Endes jedes Segments an der nächsten Position des Arms, wenn sich der Arm fortbewegt; Berechnen der erforderlichen Länge jedes Steuerkabels zum Erzeugen der erforderlichen Winkel der distalen Enden jedes Segments; und Betätigen der Aktoren zum Erzeugen der erforderlichen Kabellängen während sich der Arm zur nächsten Position bewegt.

15. Verfahren nach Anspruch 14, in dem die nächste Position des Arms, für die die Berechnung durchgeführt wird, die Position des Arms umfasst, in der jedes Segment die laufende Position des nächsten entferntesten Segments einnimmt.

## Revendications

1. Bras robotique (2, 12, 28, 44, 50) ayant une pluralité de segments articulés, et une pluralité d'actionneurs destinés à contrôler la position de chaque segment pour guider le mouvement du bras, les actionneurs comprenant des câbles ou cordes de commande (52, 76, 82, 98), un ensemble de câbles ou cordes de commande s'étendant à partir de l'extrémité proximale du dispositif et étant fixé à l'extrémité distale de chaque segment,
**caractérisé en ce qu'**au moins un des segments est doté d'un guide comprenant au moins un contact roulant ou une roue (4, 22, 26, 40, 54, 60, 78, 86, 90), le guide étant conçu pour coopérer avec une surface adjacente au bras pour guider le mouvement du bras par rapport à la surface.

2. Bras robotique selon la revendication 1, dans lequel chaque segment comprend une pluralité de liaisons articulées.

3. Bras robotique selon les revendications 1 ou 2, dans lequel chaque segment comprend au moins un canal conçu conjointement pour fournir un trajet vers l'extrémité distale du dispositif.

4. Bras robotique selon l'une quelconque des revendications précédentes, dans lequel l'extrémité proximale du dispositif est conçue pour se déplacer à l'intérieur d'un tuyau.

5. Bras robotique selon la revendication 4, dans lequel l'extrémité proximale du dispositif est montée sur un véhicule pour se déplacer à l'intérieur du tuyau.

6. Bras robotique selon l'une quelconque des revendications précédentes, ayant une section transversale sensiblement constante.

7. Bras robotique selon l'une quelconque des revendications précédentes, dans lequel chaque guide est monté en rotation par rapport au segment pour tourner autour de l'axe longitudinal du bras.

8. Bras robotique selon l'une quelconque des revendications précédentes, dans lequel le guide ou chaque guide est conçu pour être verrouillable pour résister au mouvement du segment par rapport à la surface.

9. Bras robotique selon l'une quelconque des revendications précédentes, dans lequel le guide ou chaque guide est incliné à l'écart du segment pour se mettre en prise avec la surface.

10. Bras robotique selon l'une quelconque des revendications précédentes, dans lequel le guide ou chaque guide comprend une pluralité d'éléments de guidage espacés autour de la circonférence du bras.

11. Bras robotique selon la revendication 10, dans lequel les éléments de guidage du guide ou de chaque guide sont conçus pour s'étendre sur une distance sensiblement égale à partir du bras, de sorte à amener le bras vers le centre d'un espace ayant une surface périphérique.

12. Bras robotique selon l'une quelconque des revendications précédentes, dans lequel le guide ou chaque guide comprend un dynamomètre ou une jauge de contrainte conçu pour vérifier la charge exercée sur la surface par le guide.

13. Bras robotique selon l'une quelconque des revendications précédentes, comprenant un capteur de proximité conçu pour vérifier la distance du bras à là surface.

14. Procédé de commande d'un bras robotique selon l'une quelconque des revendications précédentes, consistant à :
entrer des données dans un système de commande, les données définissant la forme d'un canal dans lequel le bras progresse, calculer à partir des données l'angle requis de l'extrémité distale de chaque segment au niveau de la position suivante du bras lorsque le bras progresse, calculer la longueur requise de chaque câble de commande pour produire les angles requis des extrémités distales de chaque segment, et actionner les actionneurs pour produire les longueurs de câble requises tout en faisant avancer le bras vers la position suivante.

15. Procédé selon la revendication 14, dans lequel la position suivante du bras pour laquelle le calcul est effectué comprend la position du bras dans laquelle chaque segment occupera la position actuelle du segment suivant le plus distant.
